# DEMANDE DE BREVET EUROPEEN

(11) **EP 1 492 210 A1**
(43) Date de publication de la demande: **29.12.2004**
(21) Numéro de dépôt: 04291053.9
(22) Date de dépôt: 22.04.2004
(51) Int. Cl.: H02H 3/087

(54) **Système de protection d'au moins une partie d'un réseau électrique de bord d'un véhicule automobile**

(30) Priorité: 26.06.2003 FR 0307739
(71) Demandeur: Peugeot Citroen Automobiles SA, 78140 Vélizy Villacoublay (FR)
(72) Inventeur: De Froissard De Broissia, Matthieu, 78100 Saint Germain en Laye (FR)
(74) Mandataire: Habasque, Etienne Joel Jean-François

(57) **Abrégé**

Ce système de protection d'au moins une partie d'un réseau électrique de bord (1) d'un véhicule automobile, raccordé à une source (2) de stockage d'énergie électrique, est caractérisé en ce qu'il comporte des moyens (4) de détection de l'état de veille/réveil de ce réseau, afin de valider/invalider le fonctionnement de moyens de protection du réseau (7,8,9), interposés entre la source (2) et ce réseau (1), et comportant des moyens (7) de comparaison du courant débité par la source dans le réseau lorsque celui-ci est en état de veille, à des informations de seuil de sécurité (Iₛ, tₛ), afin, en cas de franchissement, de déclencher le fonctionnement de moyens (8,9) d'isolation électrique de la source par rapport au réseau et protéger celui-ci.

## Description

La présente invention concerne un système de protection d'au moins une partie d'un réseau électrique de bord d'un véhicule automobile raccordé à une source de stockage d'énergie électrique.

De plus en plus d'organes électriques embarqués à bord des véhicules nécessitent pour fonctionner une alimentation électrique permanente.

Cette alimentation est ainsi nécessaire par exemple lorsque le réseau de bord est en état de veille.

Cependant, ceci peut présenter un certain nombre d'inconvénients et notamment à plus ou moins long terme, des risques de défaillance d'isolation électrique peuvent aboutir à un court-circuit aggravé.

Un tel court-circuit peut se traduire par un incendie du véhicule.

Ceci peut se produire en l'absence par exemple du conducteur du véhicule, même si le contact du véhicule est coupé, le réseau de bord étant alors en état de veille.

Aucun signe d'alerte n'est alors perçu par le conducteur avant ce phénomène et ce conducteur ne peut alors que constater les dégâts consécutifs à l'incendie de son véhicule.

Les conséquences d'un tel phénomène peuvent être catastrophiques, car l'incendie du véhicule peut non seulement détruire celui-ci, mais également s'étendre à son environnement et mettre en danger la vie de personnes.

La protection de ce type de réseaux électriques est actuellement assurée par des éléments tels que des fusibles qui équipent tous les véhicules, mais qui ne peuvent en aucun cas garantir la protection contre de tels court-circuits aggravés.

En effet, les fusibles assurent la protection des faisceaux électriques eux-mêmes et non pas celle des organes embarqués.

Par ailleurs, les phénomènes provoquant un court-circuit aggravé du type mentionné précédemment, ne mettent pas nécessairement en jeu des courants suffisamment importants pour déclencher la fusion d'un tel fusible de protection.

Le but de l'invention est donc de résoudre ces problèmes.

A cet effet, l'invention a pour objet un système de protection d'au moins une partie d'un réseau électrique de bord d'un véhicule automobile, raccordé à une source de stockage d'énergie électrique, caractérisé en ce qu'il comporte des moyens de détection de l'état de veille/réveil de ce réseau, afin de valider/invalider le fonctionnement de moyens de protection du réseau, interposés entre la source et ce réseau, et comportant des moyens de comparaison du courant débité par la source dans le réseau lorsque celui-ci est en état de veille, à des informations de seuil de sécurité, afin, en cas de franchissement, de déclencher le fonctionnement de moyens d'isolation électrique de la source par rapport au réseau et protéger celui-ci.

Suivant d'autres caractéristiques :
- les moyens d'isolation comprennent des moyens formant disjoncteur;
- les informations de seuil de sécurité comprennent des informations d'intensité et de durée de courant de seuil ;
- les informations de seuil sont paramétrables ;
- les différents moyens du système sont raccordés à une unité de diagnostic de son fonctionnement ;
- les moyens de détection de l'état de veille/réveil du réseau sont raccordés d'une part, à des moyens d'inhibition du fonctionnement des moyens de protection, et d'autre part, à des moyens de commutation connectés entre la source et le réseau, en parallèle sur les moyens de protection, afin d'assurer l'alimentation de ce réseau, en court-circuitant ces moyens de protection, lorsque le réseau est dans un état de réveil.

L'invention sera mieux comprise à la lecture de la description qui va suivre, donnée uniquement à titre d'exemple et faite en se référant aux dessins annexés, sur lesquels :
- la Fig.1 représente un schéma synoptique d'un système de protection selon l'invention ; et
- la Fig.2 illustre un exemple d'implantation d'un tel système.

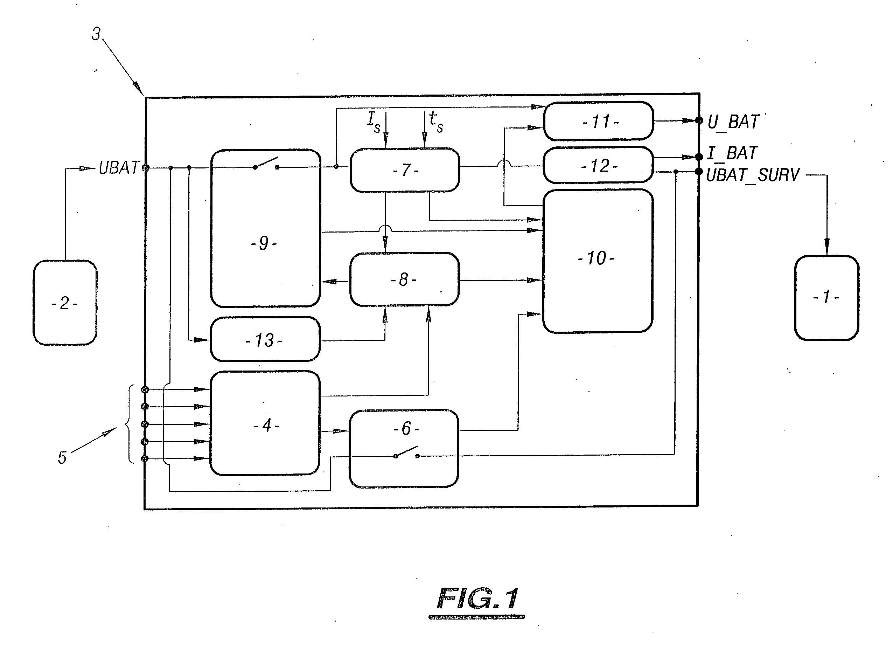

On a en effet illustré sur la figure 1, un système de protection d'au moins une partie d'un réseau électrique de bord d'un véhicule automobile, raccordé à une source de stockage d'énergie électrique.

Sur cette figure, le réseau électrique de bord du véhicule est désigné par la référence générale 1, tandis que la source de stockage d'énergie est désignée par la référence générale 2 et comporte par exemple une batterie.

Le système de protection est quant à lui désigné par la référence générale 3 et comporte des moyens 4 de détection de l'état de veille/réveil du réseau afin de valider/invalider le fonctionnement des moyens de protection du réseau.

Ces moyens de détection reçoivent en effet par différentes entrées, désignées par la référence générale 5 sur cette figure, des informations concernant l'état d'activation ou de désactivation du réseau, c'est-à-dire de réveil ou de veille de celui-ci, à partir de différents organes implantés dans celui-ci et permettant à ces moyens de détection de savoir si le réseau du véhicule est dans un état de veille ou dans un état de réveil de façon classique.

Dans le cas où le réseau est dans état de réveil, ces moyens de détection pilotent à la fermeture, des moyens de commutation désignés par la référence générale 6, connectés entre la source 2 et le réseau 1 de bord du véhicule, pour assurer l'alimentation normale de ce réseau.

Dans le même temps, ces moyens de détection, lorsque le réseau de bord est dans un état de réveil, inhibent le fonctionnement des moyens de protection.

Par contre, lorsque les moyens de détection 4 détectent que le réseau de bord est dans un état de veille, ils pilotent à l'ouverture les moyens de commutation 6 raccordés en parallèle sur les moyens de protection et valident le fonctionnement de ces moyens de protection.

Ces moyens de protection comprennent de façon générale, des moyens de détection d'une anomalie de fonctionnement, désignés par la référence générale 7 et comprenant par exemple des moyens de comparaison du courant débité par la source dans le réseau, à des informations de seuil de sécurité, pour piloter des moyens de commande 8 de moyens d'isolation électrique 9 de la source 2 par rapport au réseau 1 en cas de détection d'une anomalie.

Ainsi par exemple, lorsque le réseau de bord est dans un état de veille, on sait qu'il consomme un courant de quelques milli-Ampères. Si les moyens de détection d'anomalie détectent un courant supérieur par exemple à 1 Ampère pendant une durée par exemple supérieure à 1 seconde, on peut considérer qu'il s'agit là d'une anomalie de fonctionnement, pouvant avoir les conséquences graves évoquées précédemment et qu'il convient alors de protéger le réseau en coupant son raccordement à la source d'énergie et en isolant celle-ci du réseau.

Les moyens de détection d'anomalie pilotent alors les moyens de commande 8 pour déclencher le fonctionnement des moyens d'isolation 9.

Ces moyens d'isolation comprennent par exemple des moyens formant disjoncteur.

Les informations de seuil de sécurité évoquées précédemment peuvent par exemple comporter des informations d'intensité et de durée de seuil, respectivement désignées par lₛ et tₛ sur cette figure 1, ces informations étant par exemple paramétrables par un opérateur.

De plus, ces différents éléments peuvent être reliés à une unité de diagnostic de son fonctionnement désignée par la référence générale 10.

Différents éléments, tels que par exemple des moyens 11 de mesure de la tension de batterie, des moyens 12 de mesure du courant débité par la batterie et des moyens 13 de détection d'une inversion de polarité peuvent également être envisagés.

On conçoit alors qu'une telle structure permet d'assurer la protection du réseau de bord, en isolant la source d'énergie de ce réseau en cas de détection d'une anomalie sur la consommation électrique du véhicule lorsque le réseau de bord est en état de veille.

Une telle anomalie se traduit par une élévation anormale de la consommation électrique du réseau de bord, la consommation du véhicule en veille étant maîtrisée et n'excédant pas en temps normal quelques dizaines de milli-Ampères.

Il est donc relativement simple de déterminer un seuil au-dessus duquel le phénomène d'anomalie est détecté.

Lorsqu'une telle anomalie est détectée, la source d'énergie nécessaire à la génération et à l'entretien de l'anomalie, est alors coupée et le véhicule protégé.

Le système de protection isole purement et simplement la batterie du réseau, ce qui permet d'éviter éventuellement l'incendie du véhicule.

Une telle structure peut facilement être intégrée dans un véhicule et ne nécessite pas de modification majeure des architectures électriques utilisées.

Elle vient simplement s'intercaler entre la batterie et les organes à protéger.

Bien entendu, les moyens d'isolation après déclenchement peuvent être réarmés ou non par un opérateur de maintenance après vérification et réparation éventuelle.

On conçoit alors que les moyens de protection d'un tel système sont désactivés lorsque le réseau de bord est en état de réveil, l'alimentation de celui-ci étant assurée à travers les moyens de commutation 6 pilotés par les moyens de détection de l'état du réseau 4, tandis que lorsque ces moyens détectent que le réseau est en état de veille, les moyens de commutation 6 sont ouverts et les moyens de protection activés, pour détecter toute éventuelle anomalie de consommation du réseau, afin de couper l'alimentation en cas de problème.

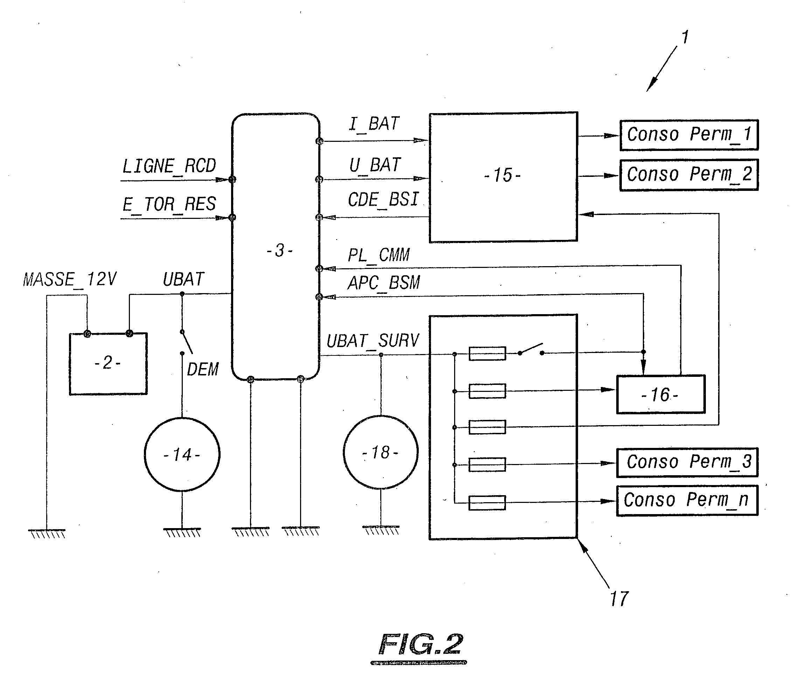

Un exemple d'implantation d'un tel système est illustré sur la figure 2 où l'on reconnaît les moyens de stockage d'énergie 2, constitués par exemple par une batterie, le système de protection selon l'invention 3 et le reste du réseau électrique de bord du véhicule, désigné par la référence générale 1.

Dans cet exemple de réalisation, le démarreur du véhicule désigné par la référence générale 14 n'est pas protégé par le système selon l'invention.

En fait, le système de protection selon l'invention est donc adapté pour assurer la protection d'un réseau comportant par exemple un boîtier de servitude intelligent désigné par la référence générale 15, un calculateur multifonctions moteur désigné par la référence générale 16 et tout autre boîtier de servitude, tel que le boîtier 17, permettant d'assurer la commande et l'alimentation des organes embarqués à bord du véhicule.

Dans l'exemple illustré, un alternateur du véhicule 18 est également protégé.

Le système de protection selon l'invention reçoit donc en entrée, des informations lui permettant de détecter l'état de veille/réveil du réseau et délivre par exemple au boîtier de servitude intelligent, des informations relatives à la tension de la batterie et au courant débité par celle-ci.

Bien entendu, différents modes de réalisation d'un tel système peuvent être envisagés.

## Revendications

1. Système de protection d'au moins une partie d'un réseau électrique de bord (1) d'un véhicule automobile, raccordé à une source (2) de stockage d'énergie électrique, **caractérisé en ce qu'**il comporte des moyens (4) de détection de l'état de veille/réveil de ce réseau (1), afin de valider/invalider le fonctionnement de moyens de protection du réseau (7,8,9), interposés entre la source (2) et ce réseau (1), et comportant des moyens (7) de comparaison du courant débité par la source dans le réseau lorsque celui-ci est en état de veille, à des informations de seuil de sécurité (lₛ, tₛ), afin, en cas de franchissement, de déclencher le fonctionnement de moyens (8,9) d'isolation électrique de la source par rapport au réseau et protéger celui-ci.

2. Système selon la revendication 1, **caractérisé en ce que** les moyens d'isolation (9) comprennent des moyens formant disjoncteur.

3. Système selon l'une quelconque des revendications 1 ou 2, **caractérisé en ce que** les informations de seuil de sécurité comprennent des informations d'intensité et de durée de courant de seuil (lₛ, tₛ).

4. Système selon l'une quelconque des revendications précédentes, **caractérisé en ce que** les informations de seuil sont paramétrables.

5. Système selon l'une quelconque des revendications précédentes, **caractérisé en ce que** les différents moyens du système sont raccordés à une unité (10) de diagnostic de son fonctionnement.

6. Système selon l'une quelconque des revendications précédentes, **caractérisé en ce que** les moyens (4) de détection de l'état de veille/réveil du réseau sont raccordés d'une part, à des moyens (8) d'inhibition du fonctionnement des moyens de protection (9), et d'autre part, à des moyens de commutation (6) connectés entre la source (2) et le réseau (1), en parallèle sur les moyens de protection (7,8,9), afin d'assurer l'alimentation de ce réseau, en court-circuitant ces moyens de protection (7,8,9), lorsque le réseau est dans un état de réveil.
